# EUROPÄISCHE PATENTANMELDUNG

(11) **EP 4 821 347 A1**
(43) Veröffentlichungstag der Anmeldung: **14.10.2026**
(21) Anmeldenummer: 25169449.3
(22) Anmeldetag: 09.04.2025
(51) Int. Cl.: A01G 23/099

(54) **MARKIERUNGSELEMENT FÜR BAUMSTÄMME UND MARKIERUNGSSYSTEM**

(71) Anmelder: Latschbacher GmbH, 4484 Kronstorf (AT)
(72) Erfinder: Latschbacher, Klaus, 4484 Kronstorf (AT)
(74) Vertreter: Patentanwälte Magenbauer & Kollegen Partnerschaft mbB

(57) **Zusammenfassung**

Die Erfindung betrifft ein Markierungselement (1; 51) für Baumstämme, mit einer Beschriftungsfläche (5), die an einer Vorderseite (3) eines plattenförmigen Grundkörpers (2) ausgebildet ist, wobei von der Vorderseite (3) wenigstens zwei Rastnasen (11) abragen, die für eine formschlüssige Kopplung mit einem Hammerkopf (62) eines Einschlaghammers (61) ausgebildet sind, wobei der Grundkörper (2) von einer Ausnehmung (21) durchsetzt ist, die zur Aufnahme eines Befestigungsnagels (81) ausgebildet ist und die bereichsweise von einer ersten Stirnfläche (25) einer mit dem Grundkörper (2) verbundenen ersten Zunge (22) berandet wird, wobei die erste Stirnfläche (25) der ersten Zunge (22) zumindest 20 Prozent eines Umfangs der Ausnehmung (21) berandet.

## Beschreibung

Die Erfindung betrifft ein Markierungselement für Baumstämme und ein Markierungssystem mit einem derartigen Markierungselement.

Die EP 1 607 926 B1 offenbart ein Signierplättchen zum Kennzeichnen von Baumstämmen, mit einem eine Signatur aufweisenden Flachkörper, der mit Haltemitteln zum Aufstecken auf einen Einschlaghammer versehen ist, wobei sich ein Nagel senkrecht durch den Flachkörper erstreckt, wobei der Nagel in einer Durchgangsöffnung des Flachkörpers klemmend und nur unter Kraftaufwand verschiebbar gehalten wird und die Haltekraft der Haltemittel geringer als die Verschiebekraft des Nagels durch die Durchgangsöffnung ausgelegt ist, und dass sich vom Rand der Durchgangsöffnung aus Schlitze nach außen erstrecken, sodass elastische Zungen gebildet werden.

Die Aufgabe der Erfindung besteht darin, ein Markierungselement für Baumstämme sowie ein Markierungssystem mit einem derartigen Markierungselement zur Verfügung zu stellen.

Diese Aufgabe wird für ein Markierungselement der eines genannten Art dadurch gelöst, dass das Markierungselement eine Beschriftungsfläche aufweist, die an einer Vorderseite eines plattenförmigen Grundkörpers ausgebildet ist, wobei von der Vorderseite wenigstens zwei Rastnasen abragen, die für eine formschlüssige Kopplung mit einem Hammerkopf eines Einschlaghammers ausgebildet sind, wobei der Grundkörper von einer Ausnehmung durchsetzt ist, die zur Aufnahme eines Befestigungsnagels ausgebildet ist und die bereichsweise von einer ersten Stirnfläche einer mit dem Grundkörper verbundenen ersten Zunge berandet wird, wobei die erste Stirnfläche der ersten Zunge zumindest 20 Prozent eines Umfangs der Ausnehmung berandet.

Das Markierungselement dient zur langfristigen Kennzeichnung von lebenden Bäumen, beispielsweise eine eindeutige Zuordnung von durchgeführten Baumpflegearbeiten zu ermöglichen, wie sie beispielsweise bei Bäumen in Parkanlagen oder an Verkehrswegen von den Eigentümern oder den Kommunen durchgeführt und dokumentiert werden müssen. Dementsprechend muss das Markierungselement dazu ausgelegt sein, mehrere Jahre am lebenden Baum zu verbleiben und wieder die Gesundheit des Baumes zu beeinträchtigen noch Gefahr zu laufen, aufgrund des Baumwachstums einzuwachsen oder gar überwachsen zu werden.

Dementsprechend findet eine Befestigung des Markierungselements abweichend von Markierungsplättchen für die Kennzeichnung von Schnittholz nicht mit Hilfe von Schneiden, die direkt am Markierungselement angebracht sind, statt. Vielmehr ist eine Befestigung des Markierungselements mit einem Nagel vorgesehen, der eine im Markierungselement ausgebildete Ausnehmung durchsetzt und der unter Verwendung eines Einschlaghammers durch die Rinde des Baums bis in das Stammholz eingeschlagen wird. Hierbei sind der Nagel und die Ausnehmung im Markierungselement derart aufeinander abgestimmt, dass das Markierungselement zumindest nahezu reibungsfrei auf dem Nagel verschoben werden kann.

Um eine möglichst einfache Handhabung des Markierungselements und des zugehörigen Nagels gewährleisten zu können, weist das Markierungselement an einer Vorderseite eines plattenförmig ausgebildeten Grundkörpers, die als Beschriftungsfläche für eine Druckbeschriftung oder Laserbeschriftung genutzt werden kann, wenigstens zwei Rastnasen auf, mit denen das Markierungselement zeitweilig an einem Hammerkopf eines Einschlaghammers formschlüssig festgelegt werden kann. Bevorzugt ist vorgesehen, dass die Rastnasen jeweils einen Rastvorsprung aufweisen, der in Richtung eines vereinfachend als Schwerpunkt bezeichneten Volumenschwerpunkts des Markierungselements abragt und der für einen formschlüssigen Eingriff in eine umlaufende Nut an einer seitlichen Oberfläche des Hammerkopfs des Einschlaghammers ausgebildet ist.

Ferner ist vorgesehen, dass die Ausnehmung im Markierungselement, die zur Aufnahme des Nagels vorgesehen ist, bereichsweise von einer ersten Stirnfläche einer ersten Zunge berandet ist. Die Zunge weist zumindest bereichsweise ein geringeres Widerstandsmoments gegen Biegung und damit eine höhere Flexibilität als der Grundkörper des Markierungselements auf. Die Funktion der Zunge besteht darin, dass das Markierungselement am Ende seiner Nutzungsdauer, wenn der Nagel zur Befestigung des Markierungselements am Baum zu weit eingewachsen ist, dass die Rinde des Baums an einer der Vorderseite des Markierungselements abgewandten Rückseite anliegt, durch eine elastische Deformation der Zunge vom Nagel heruntergeschoben werden kann. Um diese Abkopplung des Markierungselements vom Nagel gewährleisten zu können, ist vorgesehen, dass eine erste Stirnfläche der ersten Zunge, die die Ausnehmung im Markierungselement bereichsweise berandet, sich wenigstens über 20 Prozent eines Umfangs der Ausnehmung im Markierungselement erstreckt. Um sicherzustellen, dass der gewünschte Abkopplungsvorgang für das Markierungselement vom Nagel zuverlässig stattfinden kann, ist die Verwendung eines spezifisch auf das Markierungselement angepassten Nagels vorgesehen. Hierbei spielt insbesondere der Querschnitt des Nagelkopfs eine bedeutende Rolle, der weder zu groß noch zu klein sein darf. Durch die Gestaltung des Einschlaghammers, mit denen der Nagel zusammen mit dem Markierungselement verarbeitet wird, wird zumindest die Verwendung von Nägeln mit unzulässig großen Nagelköpfen unterbunden.

Vorteilhafte Weiterbildungen der Erfindung sind Gegenstand der Unteransprüche.

Zweckmäßig ist es, wenn die erste Zunge in einer ersten Verbindungszone mit dem Grundkörper verbunden ist, wobei ein Abstand zwischen der Ausnehmung und der ersten Verbindungszone wenigstens dem 1,5-fachen eines Durchmessers der Ausnehmung beträgt. Vorzugsweise ist eine Herstellung des Markierungselements in einem Kunststoffspritzgussverfahren vorgesehen, bei dem die erste Zunge einstückig mit dem Grundkörper hergestellt wird. Um sowohl eine vorteilhafte Entriegelung des Markierungselements vom Nagel am Ende der Nutzungsdauer des Markierungselements als auch eine zuverlässige Kopplung des Markierungselements mit dem Nagel während der Nutzungsdauer des Markierungselements gewährleisten zu können ist eine präzise Abstimmung der Elastizitätseigenschaften der Zunge erforderlich. Neben einer Materialstärke für die Zunge und einer Breitenerstreckung der Zunge spielt hierbei insbesondere die Längenerstreckung der Zunge eine wesentliche Rolle. Diese Längenerstreckung kann auch als Abstand zwischen der ersten Stirnfläche der Zunge, die die Ausnehmung bereichsweise berandet, und der ersten Verbindungszone beschrieben werden. Diese Längenerstreckung beträgt wenigstens das 1,5-fache des Durchmessers der Ausnehmung, wobei für den Fall, dass die Ausnehmung keinen kreisrunden Querschnitt aufweist, ein mittlerer Durchmesser der Ausnehmung für die Festlegung der Längenerstreckung der Zunge herangezogen werden kann.

Vorteilhaft ist es, wenn die Ausnehmung bereichsweise von einer ersten Stirnfläche einer ersten Grundkörperkante berandet wird, wobei ein Abstand der ersten Stirnfläche der ersten Grundkörperkante zu einem Schwerpunkt des Grundkörpers größer als ein Abstand der ersten Stirnfläche der ersten Zunge zum Schwerpunkt des Grundkörpers ist. Die Hauptaufgabe für die erste Stirnfläche der ersten Grundkörperkante des Markierungselements besteht darin, zusammen mit der ersten Stirnfläche der ersten Zunge zumindest bereichsweise die Ausnehmung im Markierungselement zu beranden und dabei eine Kraftübertragung zwischen dem Markierungselement und dem Nagel mit einem möglichst geringen Flächenpressung zu gewährleisten. Aufgrund des größeren Abstands, den die erste Stirnfläche der ersten Grundkörperkante im Vergleich zur ersten Stirnfläche der ersten Zunge gegenüber dem Schwerpunkt des Grundkörpers aufweist, kann davon ausgegangen werden, dass das Markierungselement mit der ersten Grundkörperkante auf dem Nagel aufliegt und hierdurch die gewünschte Kraftübertragung mit niedriger Flächenpressung gewährleistet ist. Zwar kann das nur lose am Nagel aufgenommene Markierungselement beispielsweise durch Windeinfluss eine Schwenkbewegung um eine Längsachse des Nagels durchführen, bei der auch eine zeitweilige Kraftübertragung von der ersten Stirnfläche der ersten Zunge auf den Nagel stattfindet, im Regelfall tritt diese Sondersituation jedoch nur selten bzw. nur über kurze Zeitspannen auf.

Bevorzugt ist vorgesehen, dass die erste Zunge in der Verbindungszone mit einer Materialstärke ausgeführt ist, die einer Materialstärke des Grundkörpers entspricht und dass die erste Zunge entlang eines, vorzugsweise leistenförmig ausgebildeten, Abschnitts, der zwischen der Verbindungszone und der Ausnehmung erstreckt ist, eine Materialstärke aufweist, die weniger als 60 Prozent der Materialstärke des Grundkörpers entspricht. Durch diese Profilierung der ersten Zunge wird eine vorteilhafte Krafteinleitung von der ersten Zunge auf den Grundkörper in der Verbindungszone gewährleistet. Die Verbindungszone ist also nicht als Filmscharnier oder Festkörpergelenk ausgebildet, mit dem eine besonders hohe Flexibilität der ersten Zunge gegenüber dem Grundkörper gewährleistet wäre. Vielmehr ist eine elastische Deformation der ersten Zunge bei der Abkopplung des Markierungselements vom Nagel im Bereich eines, insbesondere leistenförmig ausgebildeten, Abschnitts vorgesehen, der sich angrenzend an die Verbindungszone bis kurz vor die erste Stirnfläche der ersten Zunge erstreckt. Hierbei wird eine Flexibilität dieses Abschnitts der ersten Zunge durch die Breitenerstreckung des Abschnitts, die Längenerstreckung des Abschnitts, die Materialstärke des Abschnitts und die Materialauswahl für das Markierungselement bestimmt. Der zwischen der Verbindungszone und der ersten Stirnfläche erstreckte Abschnitt kann auch als Biegebalken, insbesondere als Biegebalken mit konstanten Querschnitt, angesehen werden. Eine Krümmungsebene, in der eine Querschnittsveränderung der ersten Zunge bei einem Abkopplungsvorgang des Markierungselements vom Nagel stattfinden kann, ist dabei vorzugsweise quer zum Abstand zwischen Schwerpunkt und erste Grundkörperkante ausgerichtet. Bevorzugt ist vorgesehen, dass die Verringerung der Materialstärke für den Abschnitt der ersten Zunge ausgehend von der Vorderseite des Grundkörpers vorgesehen sodass die Rückseite des Grundkörpers und eine Rückseite der ersten Zunge flächenbündig zueinander ausgerichtet sind.

Bei einer Weiterbildung der Erfindung ist vorgesehen, dass die erste Zunge angrenzend an die Stirnfläche eine als Ringabschnitt ausgebildete Verstärkung aufweist, wobei eine Materialstärke der Verstärkung zumindest im Wesentlichen der Materialstärke des Grundkörpers entspricht. Die Aufgabe des Ringabschnitts besteht darin, eine vorteilhafte Krafteinleitung mit geringer Flächenpressung zwischen dem Nagel und der ersten Zunge zu gewährleisten, wenn beispielsweise durch Windeinfluss eine Schwenkbewegung des Markierungselements um eine Schwenkachse stattfindet, die parallel zum Abstand zwischen Schwerpunkt und Ausnehmung ausgerichtet ist. Beispielhaft ist die Verstärkung als Abschnitt eines kreiszylindrischen Rings ausgebildet.

In weiterer Ausgestaltung der Erfindung ist vorgesehen, dass eine zweite Zunge spiegelsymmetrisch zur ersten Zunge am Grundkörper angebracht und ausgeführt ist, so dass eine zweite Stirnfläche der zweiten Zunge zumindest 20 Prozent eines Umfangs der Ausnehmung berandet. Mit der zweiten Zunge wird eine Abkopplung des Markierungselements vom Nagel erleichtert, da diese Abkopplung auch bei einer räumlichen Ausrichtung des Markierungselements ermöglicht wird, die bei Vorhandensein einer einzigen Zunge möglicherweise zu einer Blockierung des Abkopplungsvorgangs führen würde. Bevorzugt ist vorgesehen, dass genau zwei Zungen vorgesehen sind. Besonders bevorzugt ist vorgesehen, dass die zweite Zunge in spiegelsymmetrisch identischer Weise wie die erste Zunge ausgebildet ist und spiegelsymmetrisch zur ersten Zunge am Grundkörper angeordnet ist. Besonders bevorzugt berandeten die erste Stirnfläche der ersten Zunge und die zweite Stirnfläche der zweiten Zunge jeweils zumindest jeweils 30 Prozent des Umfangs der Ausnehmung.

Zweckmäßig ist es somit, wenn die Ausnehmung, insbesondere ausschließlich, von der ersten Stirnfläche der ersten Zunge und von der zweiten Stirnfläche der zweiten Zunge und von einer ersten Stirnfläche einer ersten Grundkörperkante berandet ist. Bevorzugt ist das Markierungselement derart ausgelegt, dass ohne den Einfluss äußerer Kräfte wie beispielsweise Windkräfte der Schwerpunkt des Markierungselements lotrecht unterhalb der Ausnehmung angeordnet ist und das Markierungselement mit der ersten Stirnfläche der ersten Grundkörperkante auf dem Nagel aufliegt, während die erste Stirnfläche der ersten Zunge und die zweite Stirnfläche der zweiten Zunge nicht oder zumindest nur in sehr geringem Umfang an einer Übertragung der Gewichtskraft des Markierungselements auf den Nagel beteiligt sind. Hierdurch wird auch bei länger, beispielsweise über mehrere Jahre, andauernden Einsatz des Markierungselements gewährleistet, dass keine durch fortdauernde Kraftbeaufschlagung hervorgerufene Deformation der ersten Zunge und der zweiten Zunge stattfindet, sodass diese auch am Ende der Nutzungsdauer für das Markierungselement noch die erforderliche Flexibilität für die Abkopplung des Markierungselements vom Nagel aufweisen.

Bevorzugt ist vorgesehen, dass die von der ersten Stirnfläche der ersten Zunge und der zweiten Stirnfläche der zweiten Zunge und der ersten Stirnfläche der ersten Grundkörperkante berandete Ausnehmung eine zylindrische Geometrie aufweist. Vorzugsweise ist eine Erstreckungsachse für die zylindrische Geometrie quer zur Vorderseite des Markierungselements ausgerichtet, sodass ohne eine Einwirkung äußerer Kräfte eine möglichst großflächige Auflage der ersten Grundkörperkante des Markierungselements auf dem Nagel sichergestellt ist. Hierdurch wird eine hohe Belastbarkeit für die als Gleitlager anzusehende Kopplung zwischen Markierungselement und Nagel gewährleistet.

Bei einer vorteilhaften Weiterbildung der Erfindung ist vorgesehen, dass die Ausnehmung einen kreisrunden Querschnitt aufweist. Hierdurch kann das Markierungselement ausgehend von einer Ausrichtung, bei der der Schwerpunkt lotrecht unterhalb der Ausnehmung liegt, bei Einwirkung von äußeren Kräften wie beispielsweise Windkräften eine freie Schwenkbewegung um eine Längsachse des Nagels durchführen, ohne dass hierbei unerwünschte Bewegungswiderstände auftreten. Somit wird vermieden, dass sich das Markierungselement in einer ungünstigen Schwenkstellung gegenüber dem Nagel verklemmt und möglicherweise eine unerwünschte, dauerhafte Krafteinleitung auf die erste Zunge oder die zweite Zunge stattfindet, durch die die Funktion der ersten Zunge und/oder der zweiten Zunge längerfristig in Frage gestellt werden könnte.

Vorteilhaft ist es, wenn eine dem Schwerpunkt des Grundkörpers zugewandte, insbesondere geradlinig ausgebildete, erste Unterkante der ersten Zunge und eine dem Schwerpunkt des Grundkörpers zugewandte, insbesondere geradlinig ausgebildete, zweite Unterkante der zweiten Zunge quer zu einem Abstand zwischen dem Schwerpunkt des Grundkörpers und einem Mittelpunkt der Ausnehmung ausgerichtet sind.

In weiterer Ausgestaltung der Erfindung ist vorgesehen, dass eine dem Schwerpunkt des Grundkörpers abgewandte, insbesondere geradlinig ausgebildete, erste Oberkante der ersten Zunge und eine dem Schwerpunkt des Grundkörpers abgewandte, insbesondere geradlinig ausgebildete, zweite Oberkante der zweiten Zunge bereichsweise quer zu einem Abstand zwischen dem Schwerpunkt des Grundkörpers und einem Mittelpunkt der Ausnehmung ausgerichtet sind.

Zweckmäßig ist es, wenn die erste Oberkante und die zweite Oberkante jeweils angrenzend an die Ausnehmung einen Winkel aus einem Intervall zwischen 20 Grad und 60 Grad, insbesondere einen Winkel von 45 Grad, zum Abstand zwischen dem Schwerpunkt des Grundkörpers und einem Mittelpunkt der Ausnehmung einschließen und dass die erste Grundkörperkante eine in Richtung des Schwerpunkts erstreckte Stütznase bildet, die ausgehend von der ersten Stirnfläche der ersten Grundkörperkante mit zunehmendem Abstand vom Schwerpunkt keilförmig verbreitert ausgebildet ist. Dabei dienen die abgeschrägten Abschnitte an der erste Oberkante der ersten Zunge und an der zweiten Oberkante der zweiten Zunge dazu, den Raum für die Stütznase bereitzustellen, die an der ersten Grundkörperkante ausgebildet ist. Die Stütznase ihrerseits dient dazu, eine vorteilhafte Krafteinleitung von der ersten Stirnfläche der ersten Grundkörperkante auf übrigen Grundkörper zu gewährleisten. Hierzu ist die mit zunehmendem Abstand vom Schwerpunkt vorgesehene keilförmige Verbreiterung der Stütznase vorgesehen, um einen vorteilhaften Kraftfluss vom Nagel über die Stütznase in den Grundkörper zu ermöglichen.

Vorteilhaft ist es, wenn eine der ersten Unterkante und der zweiten Unterkante gegenüberliegende zweite Grundkörperkante eine in Richtung des Schwerpunkts erstreckte, zumindest im Wesentlichen koaxial zur Ausnehmung ausgerichtete, kreisabschnittsförmige Vertiefung aufweist und abseits der Vertiefung parallel zur ersten Unterkante und zur zweiten Unterkante ausgerichtet ist. Die Vertiefung erleichtert die Abkopplung des Markierungselements vom Nagel bei der elastischen Deformation der ersten Zunge und/oder der zweiten Zunge und soll verhindern, dass sich das Markierungselement während des Abkopplungsvorgangs vom Nagel verklemmt.

Die Aufgabe der Erfindung wird mit einem Markierungssystem gelöst, das ein erfindungsgemäßes Markierungselement und einen in der Ausnehmung des Markierungselements aufgenommenen, vorzugsweise aus einem Metallmaterial hergestellten, insbesondere aus Stahl oder Aluminium hergestellten, Nagel umfasst, wobei der Nagel einen Nagelschaft, einen endseitig am Nagelschaft angeordneten Nagelkopf und eine Nagelspitze aufweist, wobei die Nagelspitze an einem dem Nagelkopf abgewandten Endbereich des Nagelschafts ausgebildet ist und wobei der Nagelkopf der Vorderseite des plattenförmigen Grundkörpers zugewandt ist.

Bei einer Weiterbildung des Markierungssystem ist vorgesehen, dass ein Hammerkopf eines Einschlaghammers eine ebene Schlagfläche aufweist, die für eine Anlage der Vorderseite des plattenförmigen Grundkörpers des Markierungselements ausgebildet ist, und mit einer quer zur Schlagfläche ausgerichtete Einlegenut zur Aufnahme eines Nagels versehen ist, wobei der Einlegenut eine federelastisch ausgebildete Halteklammer zugeordnet ist, die für eine formschlüssige Festlegung des Nagels in der Einlegenut ausgebildet ist. Bei einer Verwendung von Nägeln aus Eisen, insbesondere aus Stahl, kann vorgesehen sein, dass in der Einlegenut im Hammerkopf wenigstens ein Permanentmagnet angeordnet ist. Hiermit kann der Nagel durch die Anziehungskraft des Permanentmagneten so lange in der Einlegenut gehalten werden, bis der Einschlagvorgang erfolgt ist und der Einschlaghammer durch eine Schwenkbewegung von dem nunmehr im Baum eingebrachten Nagel abgelöst werden kann. Bei einer Verwendung von Nägeln aus Aluminium oder anderen nicht magnetisierbaren Werkstoffen entfällt diese Anhaftungskraft, die mit einem Magneten erzielt werden kann. In diesem Fall ist vorgesehen, dass am Hammerkopf eine federelastisch ausgebildete Halteklammer angeordnet ist, die bei einem einlegen eines Nagels in die Einlegenut eine elastische Ausweichbewegung durchführt und anschließend den Nagel in der Einlegenut hält, bis der Einschlagvorgang vorgenommen wurde und der Einschlaghammer durch die Schwenkbewegung von dem nunmehr im Baum eingebrachten Nagel abgelöst wird. Es versteht sich, dass bei Verzicht auf die Ausrüstung des Hammerkopfs mit Permanentmagneten durch die Halteklammer auch eine Festlegung von Stahlnägeln in der Einlegenut bewirkt werden kann.

Eine vorteilhafte Ausführungsform der Erfindung ist in der Zeichnung dargestellt. Hierbei zeigt:
- Figur 1: eine Vorderansicht auf eine erste Ausführungsform eines Markierungselements,
- Figur 2: eine perspektivische Darstellung des Markierungselements gemäß der Figur 1,
- Figur 3: eine Rückansicht der ersten Ausführungsform des Markierungselements,
- Figur 4: eine Rückansicht einer zweiten Ausführungsform eines Markierungselements,
- Figur 5: eine perspektivische Darstellung eines Einschlaghammers zur Verarbeitung des Markierungselements mit eingelegtem Nagel, und
- Figur 6: eine perspektivische Darstellung einer Halteklammer für den Einschlaghammer zur Festlegung des Nagels.

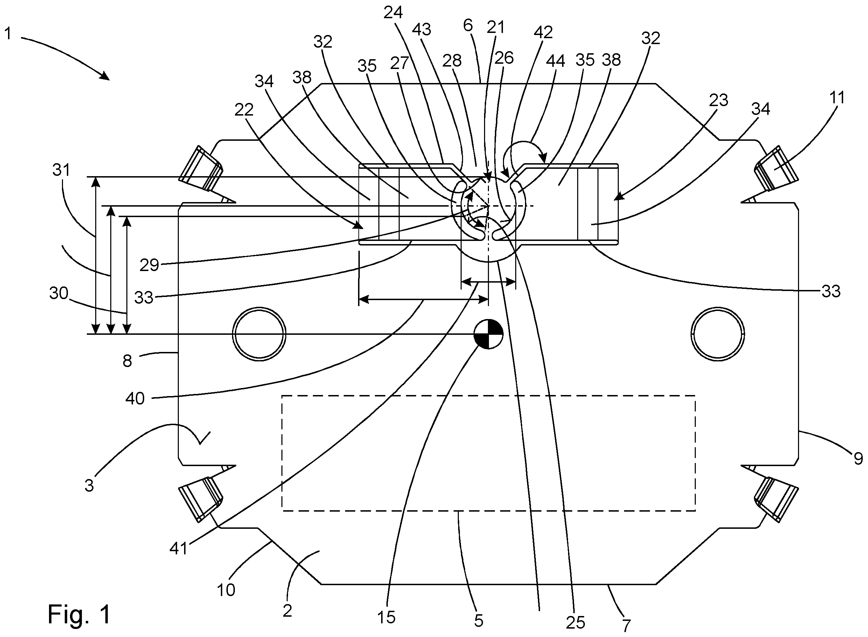

Ein in der Figur 1 gezeigt ist Markierungselement 1 ist für eine Kennzeichnung von lebenden Bäumen konzipiert und zur Verwendung mit einem nicht dargestellten Nagel vorgesehen.

Das Markierungselement 1 weist einen plattenförmigen Grundkörper 2 auf, der rein exemplarisch als Planparallelplatte mit einer zumindest im Wesentlichen ebenen Vorderseite 3 und einer zumindest im Wesentlichen ebenen Rückseite 4 ausgebildet ist. Vorzugsweise ist das Markierungselement aus einem Kunststoff, insbesondere einem Polycarbonat-Kunststoff oder einem Polyamid-Kunststoff, im Kunststoff-Spritzgussverfahren hergestellt. Auf der Vorderseite 3 ist rein exemplarisch eine Beschriftungsfläche 5 eingezeichnet, auf der beispielsweise eine Bedruckung oder eine Lesebeschriftung des Markierungselements 1 durchgeführt werden kann.

Rein exemplarisch ist der Grundkörper 2 zumindest im Wesentlichen rechteckig ausgebildet und weist jeweils paarweise parallel ausgerichtete Außenkanten 6, 7, 8 und 9 auf. Abweichend von einer Rechteckkontur weist der Grundkörper 2 abgeschrägte Kanten 10 auf, denen jeweils eine Rastnase 11 zugeordnet ist.

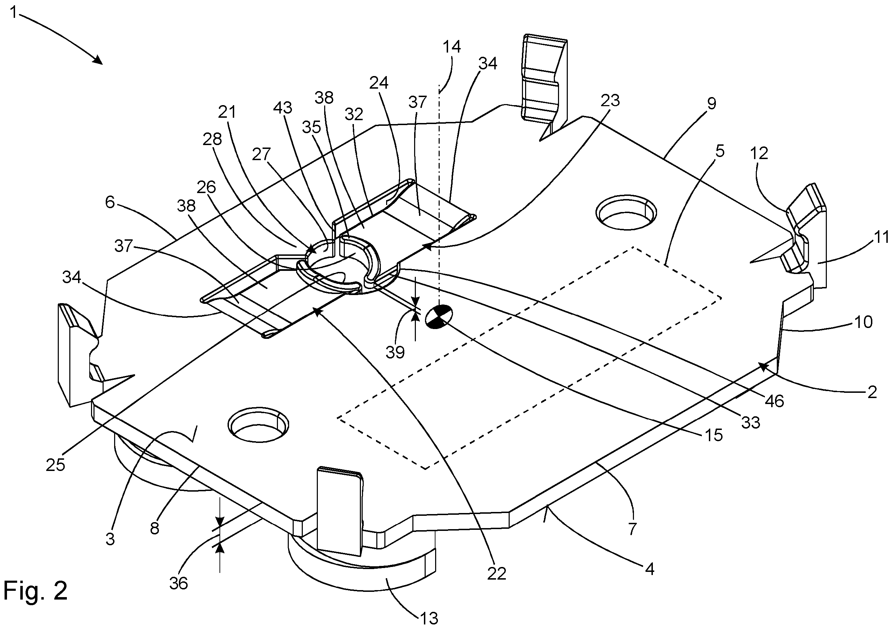

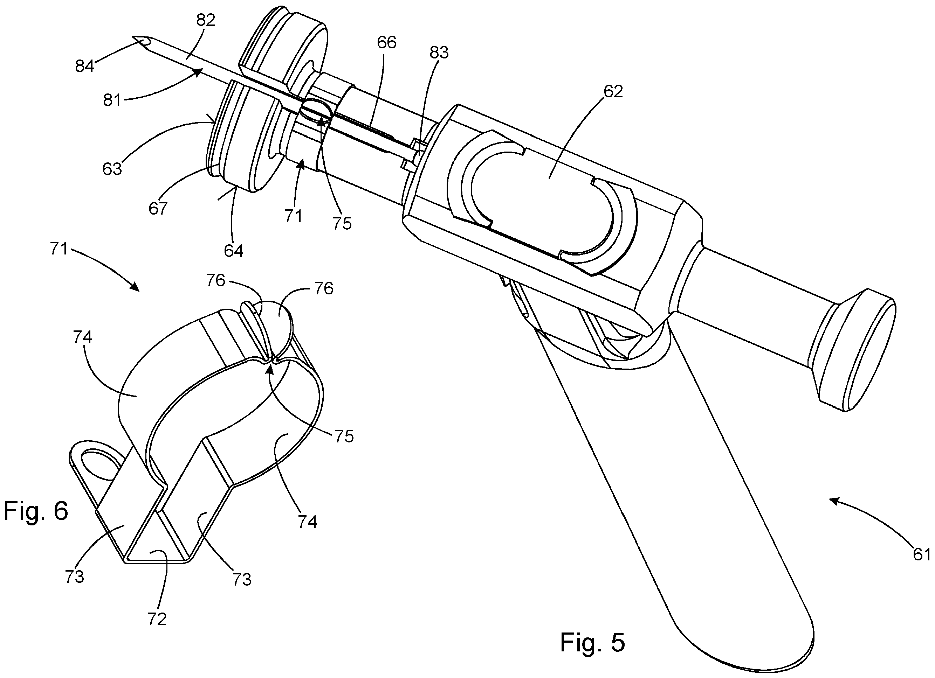

Wie der Darstellung der Figur 2 entnommen werden kann, erstreckt sich die Rastnasen 11 ausgehend von der Vorderseite 3 jeweils parallel zu einer Flächennormalen 14 der Vorderseite 3. Jede der Rastnasen 11 weist einen Rastvorsprung 12 auf, der sich in Richtung eines nur schematisch eingezeichneten, nachstehend als Schwerpunkt 15 bezeichneten Volumenschwerpunkts des Markierungselements 1 erstreckt. Die Rastnasen 11 sind in bekannter Weise für einen formschlüssigen Eingriff in eine umlaufende Nut 67 eines Einschlaghammers 51 vorgesehen, wie er in der Figur 5 dargestellt ist und nachstehend näher beschrieben wird.

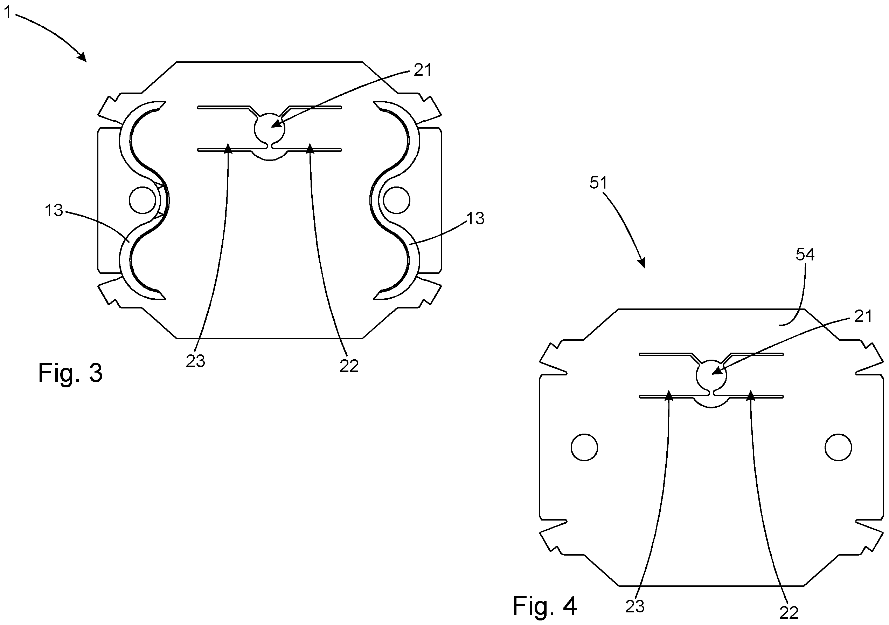

Gemäß der Darstellung der Figuren 2 und 3 sind an der Rückseite 4 des Grundkörpers 2 spiegelbildlich zueinander angeordnete, Doppel-S-förmige Schneiden 13 ausgebildet, die für die Funktion des Markierungselements 1 ohne Bedeutung sind und lediglich die Herstellung des Markierungselements 1 erleichtern. Dies ist darauf zurückzuführen, dass das Markierungselement 1 bis auf die nachstehend näher beschriebenen Geometrie zur Aufnahme eines Nagels zumindest im Wesen baugleich mit konventionellen Markierungsplättchen ist, wie sie für die Markierung von Schnittholz eingesetzt werden und für die beispielsweise eine Beschriftungsvorrichtung, insbesondere eine Laserbeschriftungsvorrichtung vorhanden ist, die auch für das erfindungsgemäße Markierungselement 1 genutzt werden soll. In diesem Zusammenhang dienen die Schneiden 13 zur Positionierung in der Beschriftungsvorrichtung, darüber hinaus gehende Funktionen sind mit den Schneiden 13 nicht verknüpft.

Abweichend von einem konventionellen Markierungsplättchen weist das Markierungselement 1 eine Ausnehmung 21 auf, die den Grundkörper 2 durchsetzt und die zur Aufnahme eines Nagels ausgebildet ist. Mit dem nicht dargestellten Nagel wird eine mechanische Verbindung zwischen dem Markierungselement 1 und einem Baum geschaffen. Vorzugsweise ist vorgesehen, dass der Nagel nur über einen Teil seiner Länge, beispielsweise über ca. 30 Prozent seiner Länge, in den Baum eingeschlagen wird und dass das Markierungselement 1 zumindest nahezu reibungsfrei auf dem Nagel verschoben werden kann. Das Markierungselement 1 ist dazu ausgebildet, über eine längere Zeitspanne, die sich über mehrere Jahre erstrecken kann, am Baum zu verbleiben. Am Ende dieser gegebenenfalls mehrjährigen Nutzungsdauer soll sichergestellt sein, dass das Markierungselement 1 von der Baumrinde, die im Zuge des Wachstumsprozesses des Baums immer näher an das Markierungselement 1 heranrückt, möglichst zerstörungsfrei vom Nagel abgekoppelt werden kann, um ein unerwünschtes Einwachsen des Markierungselements 1 in die Baumrinde zu verhindern.

Um diese Eigenschaften des Markierungselements 1 gewährleisten zu können, ist eine Reihe von äußeren Einflüssen in Betracht zu ziehen, die auf das Markierungselement einwirken. Hierbei sind insbesondere Sonneneinstrahlung, Windkräfte, Bewuchs, Eis- bzw. Schneeanhaftung zu berücksichtigen. Diese äußeren Einflüsse können die Materialeigenschaften, beispielsweise durch Materialversprödung, und/oder die geometrischen Eigenschaften, beispielsweise durch Bewuchs mit Moos, des Markierungselements 1 verändern, wobei durch die Gestaltung der Ausnehmung sichergestellt werden soll, dass die Grundfunktionen des Markierungselements im Hinblick auf die Verschiebbarkeit längs des Nagels und die Abkopplung am Ende der Nutzungsdauer nicht beeinträchtigt werden.

Wie den Darstellungen der Figuren 1 bis 3 entnommen werden kann, wird die Ausnehmung 21 von einer ersten Stirnfläche 25 einer ersten Zunge 22, von einer zweiten Stirnfläche 26 einer zweiten Zunge 23 und von einer ersten Stirnfläche 27 eine bereichsweise als Stütznase 28 ausgebildeten ersten Grundkörperkante 25 berandet. Beispielhaft ist vorgesehen, dass die von den Stirnflächen 25, 26 und 27 berandete Ausnehmung 21 einen kreisrunden Querschnitt aufweist. Ferner ist rein exemplarisch vorgesehen, dass jede der Stirnflächen 26, 27, 28 von einem Ausschnitt aus einer Mantelfläche eines Kreiszylinders gebildet ist, sodass die Ausnehmung 21 als Kreiszylindergeometrie definiert ist.

Die erste Stirnfläche 25 und die zweite Stirnfläche 26 erstrecken sich jeweils über einen Winkel 29 von etwas mehr als 120 Grad, sodass jeder der beiden Stirnflächen 25, 26 etwas mehr als 30 Prozent eines Umfangs der Ausnehmung 21 berandet.

Eine Flächenmitte der ersten Stirnfläche 27 der ersten Grundkörperkante 25, die an der Stütznase 28 ausgebildet ist, weist einen größeren Abstand 31 zum Schwerpunkt 15 als eine Flächenmitte der ersten Stirnfläche 25 der ersten Zunge 22 auf, die einen Abstand 30 zum Schwerpunkt 15 aufweist. Ferner ist die erste Stirnfläche 27 mittig , insbesondere symmetrisch zum Abstand 31 angeordnet. Hieraus resultiert, dass eine vom Markierungselement 1 auf den in der Ausnehmung 21 aufgenommenen Nagel zu übertragende Gewichtskraft im Regelfall ausschließlich über die Stütznase 28 auf den Nagel eingeleitet wird. Die Funktion der beiden Zungen 22, 23 besteht darin, eine Abkopplung des Markierungselements 1 vom Nagel so lange zu verhindern, bis die Baumrinde eine ausreichend große Kraft auf das Markierungselement 1 ausübt, die dazu führt, dass eine Abkopplung des Markierungselements 1 vom Nagel erfolgt.

Die beiden Zungen 22, 23 sind spiegelsymmetrisch zum Abstand 31 ausgebildet, sodass nachfolgend lediglich die geometrischen Eigenschaften der ersten Zunge 22 beschrieben werden, die jedoch in gleicher Weise auf zweite Zunge 23 zutreffen.

Die erste Zunge 22 ist beispielhaft streifenförmig ausgebildet. Rein exemplarisch sind eine Oberkante 32 der ersten Zunge 22 und einer Unterkante 33 der ersten Zunge 22 jeweils geradlinig und parallel zueinander ausgeführt. Die erste Zunge 22 ist einstückig mit dem Grundkörper 2 verbunden, wobei hierzu eine Verbindungszone 34 geschaffen wird, von dem aus zunächst eine Verjüngung der ersten Zunge in Richtung der Ausnehmung 21 vorgesehen ist, um in unmittelbarer Nähe der Ausnehmung 21 eine kreisringabschnittsförmige Verstärkung aufzuweisen, die für eine Vergrößerung der ersten Stirnfläche 25 der ersten Zunge 22 vorgesehen ist.

Wie der Darstellung der Figur 3 entnommen werden kann, sind die erste Zunge 22 und die zweite Zunge 23 an der Rückseite 4 des Grundkörpers 2 flächenbündig mit der übrigen, rein exemplarisch eben ausgebildeten, Rückseite 4 ausgebildet.

Gemäß den Darstellungen der Figuren 1 und 2 weist die erste Zunge 22 an der Verbindungszone 34 eine Materialstärke auf, die einer Materialstärke 36 (Dicke) des Grundkörpers 2 entspricht. Ausgehend von der Verbindungszone 34 in Richtung der Ausnehmung 21 weist die erste Zunge 22 zunächst eine keilförmige Verjüngung 37 auf, an die sich ein Leistenabschnitt 38 mit einer konstanten Materialstärke 39 anschließt. Beispielhaft ist vorgesehen, dass die Materialstärke 39 weniger als 60 Prozent der Materialstärke 36 des Grundkörpers 1 beträgt.

Die erste Zunge 22 ist derart ausgebildet, dass ein Abstand 40 zwischen einem Mittelpunkt der Ausnehmung 21 und der Verbindungszone 34 sowie für das 2-fache eines Durchmessers 41 der Ausnehmung 21 beträgt, womit die erste Zunge 22 eine Längenausdehnung aufweist, die trotz der formstabilen Anbindung der ersten Zunge 22 an den Grundkörper 2 in der Verbindungszone 34 eine elastische Ausweichbewegung zur Abkopplung des Markierungselements 1 vom Nagel sichergestellt.

Die erste Zunge 22 ist an der Oberkante 32 mit einer Abschrägung 42 versehen, um den Bauraum für die Stütznase 28 bereitzustellen. Die Stütznase 28 ist ausgehend von der ersten Stirnfläche 27 keilförmig verbreitert ausgebildet, sodass eine vorteilhafte Krafteinleitung vom Nagel auf den Grundkörper 2 gewährleistet ist, womit eine der Gewichtskraft des Markierungselements 1 entsprechende Gegenkraft auf das Markierungselement 1 eingeleitet werden kann. Eine Seitenfläche 43 der Stütznase 28 schließt rein exemplarisch einen Winkel 44 von 135 Grad mit einem abseits der Stütznase 28 liegenden Abschnitt der ersten Grundkörperkante 24 ein. Hierdurch werden bei einer Krafteinleitung vom Nagel auf die Stütznase 28 unerwünschte Kerbspannungen vermieden, wodurch die Belastbarkeit und Langlebigkeit des Markierungselements begünstigt werden.

Um eine vorteilhafte Abkopplung des Markierungselements 1 vom Nagel zu begünstigen, ist eine der ersten Unterkante 33 und der zweiten Unterkante 33 gegenüberliegende zweite Grundkörperkante 45 mit einer in Richtung des Schwerpunkts 15 erstreckten, zumindest im Wesentlichen koaxial zur Ausnehmung 21 ausgerichteten, kreisabschnittsförmigen Vertiefung 46 versehen.

Vorzugsweise ist vorgesehen, dass der Nagel einen Nagelkopf aufweist, dessen Durchmesser in etwa einem Außendurchmesser 47 der Verstärkungen 35 entspricht. Bei einer derartigen Auswahl des Nagels findet während der Abkopplung des Markierungselements 1 vom Nagel aufgrund der starren Auslegung der Stütznase 28 eine Verlagerung des Markierungselements 1 in vertikaler Richtung nach oben statt, sodass die Vertiefung 46 den notwendigen Ausweichquerschnitt für den Nagelkopf bei der flexible Deformation der beiden Zungen 22 und 23 sichergestellt.

Während bei der ersten Ausführungsform des Markierungselements 1 gemäß den Figuren 1 bis 3 an der Rückseite 4 des Grundkörpers 2 die spiegelsymmetrisch zueinander angeordneten Schneiden 13 angebracht sind, weist eine in der Figur 4 gezeigte zweite Ausführungsform eines Markierungselements 51 an seiner Rückseite 54 keine Schneiden auf. Im Übrigen ist das Markierungselement 51 identisch zum Markierungselement 1 ausgebildet.

Ein in der Figur 5 gezeigter Einschlaghammer 61 weist eine Gestaltung aus, wie sie aus dem Produktprogramm der Anmelderin bekannt ist. Der bekannte Einschlaghammer 61 wird durch die in der Figur 6 gezeigte Halteklammer 71 ergänzt, mit der eine formschlüssige Festlegung eines Nagels 81 in einer Einlegenut 66 gewährleistet wird. Die Einlegenut 66 ist derart gegenüber einer am Hammerkopf 62 ausgebildeten Einschlagfläche 63 ausgerichtet, dass ein darin aufgenommener Nagel 81 senkrecht über die Einschlagfläche 63 abragt. Bei einem Entnahmevorgang für ein Markierungselement 1 aus einem nicht dargestellten Magazin, in dem eine Vielzahl von Markierungselementen aufgenommen sind, wird durch die kreiszylindrische Außenumfangsfläche 64 eine Zentrierung des Hammerkopf 62 gegenüber dem Markierungselement 1 im Magazin erzielt. Ferner wird durch einen in der Figur 5 nicht sichtbaren Zentrierbolzen, der an einer der Einlegenut 66 entgegengesetzten Unterseite der Außenumfangsfläche 64 in radialer Richtung nach außen abragt, eine Drehorientierung für den Hammerkopf 62 gegenüber dem Magazin bewirkt, das einen zum Zentrierbolzen korrespondierenden Längsschlitz aufweist. Dementsprechend durchsetzt der Nagelschaft 82 mit der Nagelspitze 84 die jeweilige Ausnehmung 21 des Markierungselements 1 und die Rastnasen 11 können in die umlaufende Nut 67 am Hammerkopf 62 einrasten. Anschließend kann während einer Rückzugsbewegung des Hammerkopfs 62 aus dem Magazin das jeweilige Markierungselement entnommen werden und in einem nachfolgenden Arbeitsgang zusammen mit dem Nagel 81 in die Rinde und das Stammholz eines Baums geschlagen werden.

Die Halteklammer 71 kommt insbesondere dann zum Einsatz, wenn der Nagel 81 aus einem nicht magnetisierbaren Material wie beispielsweise Aluminium hergestellt ist, sodass die nicht dargestellten Permanentmagnete, die beim bekannten Einschlaghammer 61 unterhalb der Einlegenut 66 angeordnet sind, keine zuverlässige Anhaftungen des Nagels 81 bewirken können. Bei einem Verzicht auf Permanentmagnete im Hammerkopf können auch Nägel aus magnetisierbaren Materialen wie Eisen und Stahl rein mechanisch (formschlüssig) mit der Halteklammer gehalten werden.

Die Halteklammer 71 weist einen streifenförmigen Bodenabschnitt 72 auf, der endseitig mit einer Bohrung versehen ist, die bei der Anbringung der Halteklammer 71 am Hammerkopf 62 von dem Zentrierbolzen durchsetzt wird, wodurch eine Verschiebung der Halteklammer 71 längs des Hammerkopf 62 vermieden wird.

Ausgehend vom Bodenabschnitt 72 erstrecken sich zwei parallel zueinander ausgerichtete Verbindungabschnitte 73, an die sich zwei gegenläufig gekrümmte, im wesentlichen halbkreisförmige Klammerabschnitte 74 anschließen, die einen Zufuhrspalt 75 begrenzen. Um ein bequemes Einlegen eines Nagels 81 in die Einlegenut 66 zu gewährleisten, sind an die Klammerabschnitte 74 anschließende Endabschnitte 76 gegenüber den jeweiligen Klammerabschnitten 74 abgekantet ausgebildet. Hierdurch wird eine keilförmige, in Richtung des Zufuhrspalts 75 verjüngte Zufuhrgeometrie gebildet. Bei der praktischen Handhabung des Einschlaghammers 61 in Verbindung mit einem Nagel 81 kann beispielsweise vorgesehen sein, den Nagel 81 zunächst auf die Endabschnitte 76 aufzulegen und dann den Nagel 81 unter elastischer Deformation der Halteklammer 71 in die Einlegenut 66 zu drücken. Nachdem der Nagel 81 den Zufuhrspalt 75 passiert hat, wird durch die elastische Rückverformung der Halteklammer 71 die gewünschte formschlüssige Festlegung des Nagels 81 in der Einlegenut 66 bewirkt.

## Patentansprüche

1. Markierungselement (1; 51) für Baumstämme, mit einer Beschriftungsfläche (5), die an einer Vorderseite (3) eines plattenförmigen Grundkörpers (2) ausgebildet ist, wobei von der Vorderseite (3) wenigstens zwei Rastnasen (11) abragen, die für eine formschlüssige Kopplung mit einem Hammerkopf (62) eines Einschlaghammers (61) ausgebildet sind, wobei der Grundkörper (2) von einer Ausnehmung (21) durchsetzt ist, die zur Aufnahme eines Befestigungsnagels (81) ausgebildet ist und die bereichsweise von einer ersten Stirnfläche (25) einer mit dem Grundkörper (2) verbundenen ersten Zunge (22) berandet wird, wobei die erste Stirnfläche (25) der ersten Zunge (22) zumindest 20 Prozent eines Umfangs der Ausnehmung (21) berandet.

2. Markierungselement (1; 51) nach Anspruch 1, **dadurch gekennzeichnet, dass** die erste Zunge (22) in einer ersten Verbindungszone (34) mit dem Grundkörper (2) verbunden ist, wobei ein Abstand (40) zwischen der Ausnehmung (21) und der ersten Verbindungszone (34) wenigstens dem 1,5-fachen eines Durchmessers (41) der Ausnehmung (21) beträgt.

3. Markierungselement (1; 51) nach Anspruch 1 oder 2, **dadurch gekennzeichnet, dass** die Ausnehmung (21) bereichsweise von einer ersten Stirnfläche (27) einer ersten Grundkörperkante (24) berandet wird, wobei ein Abstand (31) der ersten Stirnfläche (27) der ersten Grundkörperkante (24) zu einem Schwerpunkt (15) des Grundkörpers (2) größer als ein Abstand (30) der Stirnfläche (30) der ersten Zunge (22) zum Schwerpunkt (15) des Grundkörpers (2) ist.

4. Markierungselement (1; 51) nach Anspruch 1, 2 oder 3, **dadurch gekennzeichnet, dass** die erste Zunge (22) in der Verbindungszone (34) mit einer Materialstärke ausgeführt ist, die einer Materialstärke (36) des Grundkörpers (2) entspricht und dass die erste Zunge (22) entlang eines, vorzugsweise leistenförmig ausgebildeten, Abschnitts (38), der zwischen der Verbindungszone (34) und der Ausnehmung (31) erstreckt ist, eine Materialstärke (39) aufweist, die weniger als 60 Prozent der Materialstärke (36) des Grundkörpers (2) entspricht.

5. Markierungselement (1; 51) nach Anspruch 4, **dadurch gekennzeichnet, dass** die erste Zunge (22) angrenzend an die erste Stirnfläche (25) eine als Ringabschnitt ausgebildete Verstärkung (35) aufweist, wobei eine Materialstärke der Verstärkung (35) zumindest im Wesentlichen der Materialstärke (36) des Grundkörpers (2) entspricht.

6. Markierungselement (1; 51) nach einem der Ansprüche 1 bis 5, **dadurch gekennzeichnet, dass** eine zweite Zunge (23) spiegelsymmetrisch zur ersten Zunge (22) am Grundkörper (2) angebracht und ausgeführt ist, so dass eine zweite Stirnfläche (26) der zweiten Zunge (23) zumindest 20 Prozent eines Umfangs der Ausnehmung (21) berandet.

7. Markierungselement (1; 51) nach Anspruch 6, **dadurch gekennzeichnet, dass** die Ausnehmung (21) von der ersten Stirnfläche (25) der ersten Zunge (22) und von der zweiten Stirnfläche (26) der zweiten Zunge (23) und von einer ersten Stirnfläche (27) einer ersten Grundkörperkante (24) berandet ist.

8. Markierungselement (1; 51) nach Anspruch 7, **dadurch gekennzeichnet, dass** die von der ersten Stirnfläche (25) der ersten Zunge (22) und der zweiten Stirnfläche (26) der zweiten Zunge (23) und der ersten Stirnfläche (27) der ersten Grundkörperkante (24) berandete Ausnehmung (21) eine zylindrische Geometrie aufweist.

9. Markierungselement (1; 51) nach Anspruch 8, **dadurch gekennzeichnet, dass** die Ausnehmung (21) einen kreisrunden Querschnitt aufweist.

10. Markierungselement (1; 51) nach einem der Ansprüche 6 bis 9, **dadurch gekennzeichnet, dass** eine dem Schwerpunkt (15) des Grundkörpers (2) zugewandte, insbesondere geradlinig ausgebildete, erste Unterkante (33) der ersten Zunge (22) und eine dem Schwerpunkt (15) des Grundkörpers (2) zugewandte, insbesondere geradlinig ausgebildete, zweite Unterkante (33) der zweiten Zunge (23) quer zu einem Abstand (31) zwischen dem Schwerpunkt (15) des Grundkörpers (2) und einem Mittelpunkt der Ausnehmung (21) ausgerichtet sind.

11. Markierungselement (1; 51) nach einem der Ansprüche 6 bis 10, **dadurch gekennzeichnet, dass** eine dem Schwerpunkt (15) des Grundkörpers (2) abgewandte, insbesondere geradlinig ausgebildete, erste Oberkante (32) der ersten Zunge (22) und eine dem Schwerpunkt (15) des Grundkörpers (2) abgewandte, insbesondere geradlinig ausgebildete, zweite Oberkante (32) der zweiten Zunge (23) bereichsweise quer zu einem Abstand (31) zwischen dem Schwerpunkt (15) des Grundkörpers (2) und einem Mittelpunkt der Ausnehmung (21) ausgerichtet sind.

12. Markierungselement (1; 51) nach einem der Ansprüche 10 oder 11, **dadurch gekennzeichnet, dass** die erste Oberkante (32) und die zweite Oberkante (32) jeweils angrenzend an die Ausnehmung (21) einen Winkel aus einem Intervall zwischen 20 Grad und 60 Grad, insbesondere einen Winkel von 45 Grad, zum Abstand (31) zwischen dem Schwerpunkt (15) des Grundkörpers (2) und einem Mittelpunkt der Ausnehmung (21) einschließen und dass die erste Grundkörperkante (24) eine in Richtung des Schwerpunkts (15) erstreckte Stütznase (28) bildet, die ausgehend von der ersten Stirnfläche (27) der ersten Grundkörperkante (24) mit zunehmendem Abstand vom Schwerpunkt (15) keilförmig verbreitert ausgebildet ist.

13. Markierungselement (1; 51) nach Anspruch 10, 11 oder 12, **dadurch gekennzeichnet, dass** eine der ersten Unterkante (33) und der zweiten Unterkante (33) gegenüberliegende zweite Grundkörperkante (45) eine in Richtung des Schwerpunkts (15) erstreckte, zumindest im Wesentlichen koaxial zur Ausnehmung (21) ausgerichtete, kreisabschnittsförmige Vertiefung (46) aufweist und abseits der Vertiefung (46) parallel zur ersten Unterkante (33) und zur zweiten Unterkante (33) ausgerichtet ist.

14. Markierungssystem mit einem Markierungselement (1; 51) nach einem der Ansprüche 1 bis 13 und einem in der Ausnehmung aufgenommenen, vorzugsweise aus einem Metallmaterial hergestellten, insbesondere aus Stahl oder Aluminium hergestellten, Nagel (81), der einen Nagelschaft (82) einen endseitig am Nagelschaft angeordneten Nagelkopf (83) und eine Nagelspitze (84) aufweist, die an einem dem Nagelkopf (83) abgewandten Endbereich des Nagelschafts (82) ausgebildet ist, wobei der Nagelkopf (83) der Vorderseite (3) des plattenförmigen Grundkörpers (2) zugewandt ist.

15. Markierungssystem nach Anspruch 10, **dadurch gekennzeichnet, dass** ein Hammerkopf (62) eines Einschlaghammers (61) eine ebene Schlagfläche (63) aufweist, die für eine Anlage der Vorderseite (3) des plattenförmigen Grundkörpers (2) des Markierungselements (1) ausgebildet ist, und mit einer quer zur Schlagfläche (63) ausgerichteten Einlegenut (66) zur Aufnahme eines Nagels (81) versehen ist, wobei der Einlegenut (66) eine federelastisch ausgebildete Halteklammer (71) zugeordnet ist, die für eine formschlüssige Festlegung des Nagels (81) in der Einlegenut (66) ausgebildet ist.
